(19) Europäisches Patentamt
European Patent Office
Office européen des brevets

(11) EP 1 108 359 A1

(12) EUROPEAN PATENT APPLICATION

(43) Date of publication:
20.06.2001 Bulletin 2001/25

(51) Int Cl.⁷: A01N 59/16, A01N 59/26

(21) Application number: 00126597.4

(22) Date of filing: 13.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.12.1999 JP 35363499**
**07.12.2000 JP 2000372346**

(71) Applicants:
- **TOMITA PHARMACEUTICAL CO., LTD.**
**Naruto-city, Tokushima 771-03 (JP)**
- **The Secretary of Agency of Industrial Science and Technology**
**Tokyo 100-0013 (JP)**

(72) Inventors:
- **Makita, Yoji, Shikoku Nat. Ind. Research Inst.**
**Takamatsu-shi, Kagawa-ken (JP)**
- **Ikai, Osamu, Shikoku Nat. Ind. Research Inst.**
**Takamatsu-shi, Kagawa-ken (JP)**
- Ooi, Kenta, Shikoku Nat. Ind. Research Inst.
**Takamatsu-shi, Kagawa-ken (JP)**
- Sonoda, Akinari,
**Shikoku Nat. Ind. Research Inst.**
**Takamatsu-shi, Kagawa-ken (JP)**
- Taya, Masahito, Graduate School Eng. Sciency
**Toyonaka-shi, Osaka-fu (JP)**
- Nishioka, Motomu,
**Graduate School Eng. Sciency**
**Toyonaka-shi, Osaka-fu (JP)**
- Ookubo, Akira, Tomita Pharmceutical Co., Ltd.
**Seto-cho, Naruto-shi, Tokushima-ken (JP)**
- Mihara, Mikiko, Tomita Pharmceutical Co., Ltd.
**Seto-cho, Naruto-shi, Tokushima-ken (JP)**

(74) Representative: **Müller-Boré & Partner**
**Patentanwälte**
**Grafinger Strasse 2**
**81671 München (DE)**

(54) **Biocidal material and biocidal method**

(57) A biocidal material comprising, as an active ingredient, a compound represented by General Formula (1)

$$(Ag_2O)_a(A_2O)_b(BO)_c(C_2O_3)_d(SiO_2)_e(DO_2)_f(E_2O_5)_g \quad (1)$$

(wherein A represents at least one species selected from the group consisting of alkali metallic elements, Cu, H and ammonium; B is at least one species selected from the group consisting of Fe, Cu, Zn, alkali earth metallic elements, Ni, Mn, Co, Cd, Hg and Au; C represents at least one species selected from the group consisting of Fe, Al, Mn, B, Co, Cr, V, Sc, Y, La, Ga, In, Sb and Bi; D represents at least one species selected from the group consisting of Ce, Mn, C, Hf and Os; E represents at least one member selected from P, Sb, V, Nb, Ta and Bi; the subscriptions respectively are numbers which satisfy $0 < a$, $0 < a+b < 15$, $0 \leqq c < 15$, $0 \leqq d < 5$, $0 < e$, $0 < e+f < 7.5$, $0 < g < 3$, $10 \leqq a+b+c+3d+2(e+f)+5g \leqq 15$).

## Description

The present invention relates to a biocidal material which comprises a specific silicon-containing metallic salt compound as an active ingredient which contains silver ions having biocidal or antimicrobial properties as a biocidal element, a biocidal material complex comprising the biocidal material and calcium phosphates, a biocidal method using the biocidal material or the biocidal material complex and a method for regenerating the biocidal material complex.

In the biocidal material of the invention, an amount of silver ions retained therein is largely increased by introduction of silicon (Si) to a metallic salt compound as compared to the conventional silver-based phosphate biocidal materials, thereby to improve its biocidal ability against pathogenic microorganisms (inclusive of phage and virus particles in this specification). Further, the invention relates to techniques for improving the biocidal material in biocidal properties by combining calcium phosphates having a high affinity for the pathogenic microorganisms and the biocidal material of the invention and techniques for regenerating and reusing the biocidal material complex by desorbing dead cells therefrom by a cell desorbing solution or calcination.

Recently, contamination of the living environment due to pathogenic microorganisms including bacteria such as *Escherichia coli, Pseudomonas aeruginosa, Salmonella, Klebsiella pneumoniae. Staphylococcus aureus, Micrococous,* MRSA, *Corynebacterium* and *Bacillus subtilis;* phages such as T phage and λ phage; viruses such as influenza virus, HIV, rabies virus, herpes virus, yellow fever virus, poliovirus, tobacco mosaic virus and poxvirus; and molds such. as *Aspergillus niger. Cladosporium, Chaetomium* and *Penioillium,* Protozoa and the like has been causing a serious social problem. Considering future diversity in our lifestyles or future expansion and fluidity of the sphere for living activities, therefore, it is an increasingly important issue to suppress infestation of the pathogenic microorganisms, Protozoa and the like in order to maintain safety and hygiene of our living environment.

Conventionally, there have been used inorganic biocidal materials or antimicrobial materials which retain metal ions or metals having biocidal action such as silver, zinc and copper, etc. by means of impregnation, adsorption, ion exchange or like treatments.

Examples of the typical inorganic biocidal materials or antimicrobial materials are a silver ion-containing phosphate zirconium (Japanese Unexamined Patent Publication Nos. 1991-83905 and 1994-330285), a silver ion-containing zeolite (Japanese Unexamined Patent -Publication Nos. 1988-265809 and 1989-286913), a copper·zinc-containing metal oxide·hydroxide complex (Japanese Unexamined Patent Publication Nos. 1996-48606 and 1996-291011), a silver-containing hydroxyapatite (Japanese Unexamined Patent Publication Nos. 1992-300975 and 1993-78218), etc. Among them, a so-called silver-based inorganic antimicrobial material (hereinafter referred to as "silver-based biocidal material"), wherein silver ions are retained by an inorganic compound, is utilized in various fields because of the remarkably high antimicrobial properties and excellent safety.

There are many explanations for the biocidal action mechanism of silver ions and, at present, they are roughly divided into two as described below. One of them explains that, since silver ions are highly reactive with functional groups in vivo such as -SH, -S, -NH$_2$, -NH, -COOH, etc., especially with -SH group and -NH$_2$ group, they exhibit biocidal properties by inhibiting enzymes in vivo as being bonded to proteinaceous SH groups in the cytoplasm after being adsorbed on the cell walls and passing therethrough. The other explains that silver ions exhibit biocidal properties in such a manner that they are retained by the cell membranes as being adsorbed on the cell surfaces to generate activated oxygen ($O_2^-$) or hydroxy radicals (•OH) or the like which attack the pathogenic microorganisms. In both the explanations, silver ions produce the biocidal effect by acting on the cells.

It has heretofore been known that silver ions, like copper ions and zinc ions have biocidal properties, and metal salts or metal salt solutions containing the above metal ions have been used as biocidal materials. However, since a large amount of silver ions is harmful to human body, the dosage and usage are limited at present. Regarding the biocidal properties of silver ions to be exerted on *Escherichia coli,* it is known that the biocidal rate is accelerated at a silver ion concentration of $10^{-8}$ mol/cm$^3$ or more and that the biocidal rate depends on a supply rate of silver ions. Accordingly, it is considered that a small amount of silver ions acts satisfactorily on the pathogenic microorganisms and that it is important whether or not the biocidal material to be used can supply smallest required amount of silver ions continuously to the microorganisms. Further, from the viewpoints that the silver-based inorganic biocidal material is lower in the biocidal rate than an organic biocidal material, etc., and that silver itself is an expensive metal, it is pointed out that the price of the antimicrobial material unavoidably goes up in case of increasing the antimicrobial effect by increasing the amount of silver to be retained therein. In a process for biocidal treatment against the pathogenic microorganisms using a biocidal material, it is primarily necessary that a biocidal metal (e.g. silver ions) in the biocidal material should contact the pathogenic microorganisms to carry out the biocidal treatment. Therefore, it is important to increase as efficiently as possible the number of contacts between the biocidal material and the pathogenic microorganisms in view of improving the effect of biocidal treatment which is carried out in a short time. Moreover, from the viewpoint of making good use of resources, it is important for the biocidal material to produce a high biocidal effect with a small amount of silver retained therein and, accordingly, it is strongly desired to develop a biocidal method which encompasses the recycle of the biocidal material.

An object of the present invention is to provide a biocidal material to satisfy the above requirements and demands, which are excellent in chemical resistance and heat resistance and capable of continuously releasing a microdose of silver ion, a biocidal material complex which produces a high biocidal effect per unit time with a small amount of silver retained therein and techniques for recycling the biocidal material complex.

The inventor of the present invention carried out extensive researches considering the above object, and found that it is possible to increase the amount of silver ions retained in the biocidal material by introducing silicon (Si) as a crystal lattice-constitutive element to a metallic salt compound, and that the silver ionretaining-silicon-containing metallic salt compound wherein silver is introduced, is

remarkably excellent in chemical stability and physical stability and capable of releasing silver ions in a small amount effective for biocidal action.

The inventors also found that a biocidal material complex prepared by mixing the biocidal material and calcium phosphates having not a biocidal action but a high affinity for pathogenic microorganisms can accelerate the biocidal rate due to an interaction between the biocidal material and calcium phosphates, and that the biocidal material complex performs biocidal treatment effectively with a small amount of silver ions since the amount of silver ions can be relatively reduced per unit weight thereof due to the combination of the biocidal material and calcium phosphates.

Furthermore, the inventors found that the biocidal material complex after performing biocidal treatment can be regenerated and reused by subjecting it to a desorption treatment using a suitable cell-desorbing agent or to calcination treatment, thereby to separate and remove dead cells and renew the surface of the biocidal material complex.

Primarily, the invention provides a biocidal material prepared by introducing silicon and silver ions to a metallic salt compound. Secondary, the invention provides a biocidal material complex prepared by mixing the biocidal material and calcium phosphates for the purpose of improving the biocidal properties. Thirdly, the invention provides a biocidal method characterized in that, after biocidal treatment of a gas or liquid containing the pathogenic microorganisms by bringing them into contact with the biocidal material complex, the biocidal material is regenerated by separating and removing dead cells therefrom using a suitable cell-desorbing agent or by calcinating the biocidal material so as to reuse the biocidal material complex.

Thus, the invention provides the following biocidal material, biocidal material complex, biocidal method and regenerating method.

Item 1. A biocidal material comprising, as an active ingredient, at least one species selected from the group consisting of

a metallic salt compound represented by General Formula (1)

$$(Ag_2O)_a(A_2O)_b(BO)_c(C_2O_3)_d(SiO_2)_e(DO_2)_f(E_2O_5)_g \tag{1}$$

(wherein A represents at least one species selected from the group consisting of alkali metallic elements, Cu, H and ammonium; B is at least one species selected from the group consisting of Fe, Cu, Zn, alkali earth metallic elements, Ni, Mn, Co, Cd, Hg and Au; C represents at least one species selected from the group consisting of Fe, Al, Mn, B, Co, Cr, V, Sc, Y, La, Ga, In, Sb and Bi; D represents at least one species selected from the group consisting of Ce, Mn, C, Hf and Os; E represents at least one species selected from P, Sb, V, Nb, Ta and Bi; the subscriptions respectively are numbers which satisfy $0<a$, $0<a+b<15$, $0\leqq c<15$, $0\leqq d<5$, $0<e$, $0<e+f<7.5$, $0<g<3$, $10\leqq a+b+c+3d+2(e+f)+5g\leqq15$);
a metallic salt compound represented by General Formula (2)

$$Ag_{a'}B'_{c'}D'_{e'}Al_{f'}Si_{g'}P_{h'}O_{i'} \tag{2}$$

(wherein B' represents at least one species selected from the group consisting of alkali metallic elements, alkali earth metallic elements, Cu, Zn, Fe, H and ammonium; D' represents at least one species selected from the group consisting of Zr, Ti and Sn; the subscriptions respectively are numbers which satisfy $0<a'$, $o\leqq c'$, $0<a'+c'\leqq4$, $0<e'$, $0<f'$, $0<e'+f'\leqq2$, $0<g'\leqq3$, $0\leqq h'\leqq3$, $10\leqq i'\leqq15$); and
a metallic salt compound represented by General Formula (3)

$$Ag_{a''}B''_{c''}D''1_{e''}D_2{}_{f''}Si_{g''}P_{h''}O_{i''} \tag{3}$$

(wherein B" represents at least one species selected from the group consisting of alkali metallic elements, alkali earth metallic elements, Cu, Zn, Fe. H and ammonium; $D_1"$ represents at least one species selected from the group consisting of Zr, Ti and Sn; $D_2"$ represents at least one species selected from the group consisting of metallic elements which can be transformed to be metal ions having 3-5 valences other than Zr, Ti, Sn and Al; the subscriptions respectively are numbers which satisfy $0<a"$, $0\leqq c"$, $1<a"+c"\leqq 4$, $1\leqq e"+.f"\leqq 2$, $0<g"\leqq 3$, $0\leqq h"<3$, $10\leqq i"\leqq 15$).

Item 2. A biocidal material complex comprising at least one metallic salt compound as set forth in item 1 and calcium phosphate.

Item 3. A biocidal method comprising bringing the biocidal material of item 1 or the biocidal material complex of item 2 into contact with a gas or liquid containing pathogenic microorganisms.

Item 4. A method for regenerating the biocidal material complex comprising the steps of

bringing the biocidal material complex of item 2 into contact with a gas or liquid containing pathogenic microorganisms; and

removing the pathogenic microorganisms adsorbed to the biocidal material complex from the biocidal material complex by means of a cell-desorbing agent or calcination.

Fig. 1 is a graph showing a relationship between the biocidal time using the biocidal materials obtained in Examples 1 and 2 and the survival rate of *Escherichia coli.*

Fig. 2 is a graph showing the relationship between the biocidal time using the biocidal material obtained in Example 6 and the survival rate of *Escherichia coli.*

Fig. 3 is a graph showing the relationship between the biocidal time using the biocidal material obtained in Example 5 and the survival rate of *Escherichia coli.*

The biocidal material and biocidal material complex of the invention are effective against bacteria, phages, viruses and molds. Examples of the bacteria are *Escherichia coli, Pseudomonas aeruginosa, Salmonella, Klebsiella pneumoniae, Staphylococcus aureus, Micrococcus,* MRSA, *Corynebacterium, Bacillus subtilis,* etc.; examples of the phages are T phage, $\lambda$ phage, etc.; examples of the viruses are influenza virus, HIV, rabies virus, herpes virus, yellow fever virus, poliovirus, tobacco mosaic virus, poxvirus, etc.; examples of the molds are *Cladosparium, Aspergillus, Chaetomium, Pencillium, Rhizopus, Fusarium, Alternaria, Gliocladium, Aureobasidium.* etc.

The biocidal material of the invention may preferably have, but not limited to, silicon in the crystal lattice of the metallic salt compound.

The biocidal material of the invention includes the hydrate of a compound represented by General Formulas (1), (2) and (3).

In General Formula (1), A may be, for example, at least one species selected from the group consisting of alkali metallic element, Cu, H and ammonium. Examples of the alkali metallic element include Li, Na, K and the like. Among them, Li, Na, K, H and ammonium are preferable.

In General Formula (1), B is at least one species selected from the group consisting of Fe, Cu, Zn, alkali earth metallic elements. Ni, Mn, Co, Cd, Hg and Au. Examples of the alkali earth metallic element include Mg, Ca and the like. Among them, Fe, Cu, Zn, Mg and Ca are preferable.

In General Formula (1), C is at least one species selected form the group consisting of Fe, Al, Mn, B, Co, Cr. V, Sc, Y, La, Ga. In, Sb and Bi. Among them, Al, Fe, Mn and B are preferable.

In General Formula (1), D is at least one species selected from the group consisting of Ce, Mn, C, Hf and Os. Among the, Mn and C are preferable.

In General Formula (1), E is at least one species selected from the group consisting of P. Sb, V, Nb, Ta and Bi. Among them, P and V are preferable.

In General Formula (1), $0<e+f<7.5$ is satisfied; $e+f$ may preferably be $2<e+f\leqq 5$.

In General Formula (2), B' is at least one species selected from the group consisting of alkali metallic elements, alkali earth metallic elements, Cu, Zn, Fe, H and ammonium. Examples of the alkali metallic element include Li. Na, K and the like. Examples of the alkali earth metallic element include Mg, Ca and the like. Among them, Cu, Zn, Li, Na, K, ammonium are preferable.

In General Formula (2), D' is at least one species selected from the group consisting of Zr, Ti and Sn. Among them, Zr and Ti are preferable.

In General Formula (2), $0<a'+c'\leqq 4$ is satisfied; $a'+c'$ may preferably be $1.5\leqq a'+c'\leqq 4$, more preferably $2\leqq a'=c'\leqq 4$.

In General Formula (2), $0< e'+f'\leqq 2$ is satisfied; $e'+f'$ may preferably be $1\leqq e'+f'\leqq 2$.

In General Formula (2), $0<g'\leqq 3$ is satistied; $g'$ may preferably be $0.5\leqq g'\leqq 3$, more preferably $1\leqq g'\leqq 2.5$.

In General Formula (2), $0\leqq n'\leqq 3$, preferably $0.2<h'\leqq 3$, more preferably $0.5\leqq h'\leqq 3$.

In General Formula (2), i' can be suitably selected depending on the amount of the element other than O. The i' is preferably in the range of $10 \leqq i' \leqq 15$, more preferably $11 \leqq i' \leqq 13$.

In General Formula (3), B" is at least one species selected from the group consisting of alkali metallic elements, alkali earth metallic elements, Cu, Zn, Fe, H and ammonium. Examples of the alkali metallic element include Li, Na, K and the like. Examples of the alkali earth metallic element include Mg, Ca and the like. Among them, Fe, Cu, zn, Li, Na, K and ammonium are preferable.

In General Formula (3), $D_1$" is at least one species selected from the group consisting of Zr, Ti and Sn. Among them, Zr and Ti are preferable.

In General Formula (3), $D_2$" is at least one species selected from the group consisting of metallic elements which can be transformed to be metal ions having 3-5 valences other than Zr, Ti, Sn and Al. Among them, Fe, Mn and Nb are preferable.

In General Formula (3), $1 < a" + c" \leqq 4$ is satisfied; a"+c" may preferably be $1.5 \leqq a" + c" \leqq 4$, more preferably $2 \leqq a" + c" \leqq 4$.

In General Formula (3), $1 \leqq e" + f" \leqq 2$ is satisfied; e"+f" may preferably be 2.

In General Formula (3). $0 < g" \leqq 3$ is satisfied; g" may preferably be $0.5 \leqq g" \leqq 3$, more preferably $1 \leqq g" \leqq 2.5$.

In General Formula (3), $0 \leqq h" < 3$ is satisfied; h" may preferably be $0 < h" \leqq 2.5$, more preferably $0.5 \leqq h" \leqq 2$.

In General Formula [3], i" can be suitably selected depending on the amount of the elements other than O. The i" may be preferably $10 \leqq i" \leqq 15$, more preferably $11 \leqq i" \leqq 13$.

The biocidal material of the invention is synthesized by a solid phase reaction, wet method, hydrothermal synthesis or the like, and, for example, can be obtained easily in such a manner as described below without being limited thereto.

The ingredient for synthesizing the biocidal material of the invention is a compound containing an alkali metallic element a compound containing ammonium, a compound containing an alkali earth metallic element or a transition metal element which can be transformed to be bivalent metal ions, a compound containing silicon, a compound containing a metallic element which can be transformed to be metal ions having 3-5 valences or a compound containing phosphoric acid or the like. These ingredients may be used in combination at a suitable mixing ratio when so required depending on the desired biocidal material.

In the solid phase reaction, the above ingredients are mixed in a suitable ratio, followed by calcinating at a temperature of 400-1300°C, thereby to give a compound represented by General Formula (1), (2) or (3).

In the hydrothermal synthesis, the above ingredients are mixed in a suitable ratio, and then the mixture and water are sealed in a pressure vessel to react at a temperature of 300-400°C for 10-60 hours, preferably at a temperature of 330-380°C for 20-50 hours, under hydrothermal conditions, thereby to give a compound represented by General Formula [1], [2] or [3].

The compound containing an alkali metallic element to be used as an ingredient is not limited insofar as it contains an alkal1 metallic element. Examples of the compound containing an alkali metallic element include carbonate, hydrogencarbonate, nitrate, nitride, hydroxide, oxide, peroxide, oxalate of an alkali metal and the like. At least one of these compounds may be used as the ingredient. Among them, carbonate, hydrogencarbonate and nitrate are preferable, and sodium carbonate, potassium carbonate and sodium nitrate are more preferable.

The compound containing ammonium to be used as an ingredient is not limited insofar as it contains ammonium. Examples of the compound contains ammonium phosphate, hydrogencarbonate, carbonate, nitrate, hydroxide, oxide, oxalate and the like. At least one of these compounds may be used as the ingredient. Among them, preferable are phosphate, hydrogencarbonate and carbonate, and more preferable are diammonium hydrogenphosphate, ammonium hydrogencarbonate and ammonium carbonate.

The compound containing an alkali earth metallic element or a transition metal element which can be transformed to be bivalent metal ions is not limited insofar as it contains an alkali earth metallic element or a transition metal element which can be transformed to be bivalent metal ions. Examples of such compound include carbonate, hydrogencarbonate, hydroxide, oxide, nitrate, nitride of an alkali earth metal or a transition metal element and the like. At least one of these compound may be used as the ingredient. Among them, preferable are carbonate, hydrogencarbonate, nitrate and oxide of an alkali earth metal and hydroxide, nitrate and oxide of a transition metal. More preferable are calcium carbonate, magnesium carbonate, calcium nitrate, magnesium nitrate, zinc nitrate, copper nitrate, calcium oxide, magnesium oxide, copper oxide and zinc oxide.

The compound containing silicon to be used as an ingredient is not limited. Examples of such compound include silicon dioxide, silicate and the like. At least one of these compounds may be used as the ingredient. Among them preferable are silicon dioxide, sodium silicate and colloidal silica, and more preferable is silicon dioxide.

The compound containing a metal element which can be transformed to be metal ions having 3-5 valences to be used as an ingredient is not limited insofar as it contains a metal element which can be transformed to be metal ions having 3-5 valences. Examples of such compound include metal oxide, hydroxide, carbonate, chloride, nitrate and the like. At least one of these compounds may be used as the ingredient. Among them, preferable are zirconium oxide, titanium oxide, iron oxide, tin oxide, zirconium oxide hydrate, titanium oxide hydrate, niobium oxide, chromium oxide, chromium nitrate, iron nitrate, aluminium nitrate, aluminium oxide, zirconium oxychloride, titanium chloride, aluminium chloride, tantalum chloride and the like. Among these compounds, preferable are iron nitrate, aluminium nitrate, aluminium oxide, iron oxide, zirconium oxide, titanium oxide, zirconium oxychloride and titanium chloride.

The compound containing phosphoric acid to be used as an ingredient is not limited insofar as it contains phosphoric acid. Examples of such compound include phosphate, hydrogenphosphate and the like. At least one of these compounds may be used as the ingredient. Among these compounds, preferable are sodium phosphate, zirconium phosphate, titanium phosphate, potassium phosphate, ammonium phosphate, sodium hydrogenphosphate, potassium hydrogenphosphate, ammonium hydrogenphosphate and the like. Among them, more preferable are sodium phosphate, zirconium phosphate, titanium phosphate, ammonium phosphate and ammonium hydrogenphosphate.

A silver-retaining type biocidal material, among the biocidal materials of General Formula (1), (2) or (3), is obtainable by converting one of the compounds, which do not comprise silver ion and comprise an alkali metallic element, H or ammonium as cation concerning ion exchange, represented by General Formulas(1),(2) and (3) obtained by the solid phase reaction, wet method, hydrothermal method, etc. to a protic compound by treating the compound with an acidic solution adjusted to a predetermined concentration of, for example, 0.1-3 N at a temperature ranging from room temperature to 100°C for 3 hours-7 days, followed by immersing the resultant protic compound in a silver ion-containing aqueous solution adjusted to a predetermined concentration of, for example, 0.1-3 N for 3 hours-7 days. Examples of the acidic solution employed in this case are a hydrochloric acid, nitric acid, etc., preferably a hydrochloric acid. As the silver ion-containing aqueous solution, a silver nitrate aqueous solution is suitably used.

The silver-retaining type biocidal material, among the biocidal materials of General Formula (1), (2) and (3), can also be prepared by omitting the above treatment with the acidic solution and immersing the compound in the above silver-ion containing aqueous solution.

Further, a silver-copper-retaining type biocidal material, among the biocidal material of General Formulas (1), (2) and (3), can be obtained by adding the above protic compound to a copper ion-containing aqueous solution adjusted to have a predetermined copper ion concentration, e.g.. about 0.1-3N and stirring the mixture to hold the copper ion, followed by stirring for about 0.5-10 hours in a silver ion containing aqueous solution adjusted to about 0.01-3N. Examples of the copper ion-containing aqueous solution employed in this case are a copper nitrate aqueous solution, copper chloride aqueous solution, etc.. As the silver ion-containing aqueous solution, a silver nitrate aqueous solution is suitably used.

This procedure is also applicable to the preparation of the biocidal materials of a zinc-retaining type, silver-zinc-retaining type or silver-iron-retaining type among the biocidal materials represented by General Formulas(1), (2) and (3), wherein a silver ion-containing aqueous solution, a zinc ion-containing aqueous solution, an iron ion-containing aqueous solution and the like are suitable used. Examples of the zinc ion-containing aqueous solution include zinc chloride, zinc nitrate, zinc sulfate and the like. Examples of the iron ion-containing aqueous solution include iron nitrate, ferric chloride and the like.

The biocidal material complex to be used in the invention is not limited as long as the biocidal material complex comprises at least one species selected from the metallic salt compounds represented by General Formulas (1), (2) and (3) and calcium phosphate. The biocidal material complex is prepared by the following method, for example.

An acidic aqueous solution prepared by dissolving calcium phosphates to acid or an aqueous solution prepared by dissolving a phosphate compound and calcium compound to have a target chemical composition and an alkaline aqueous solution wherein suspended is the biocidal material, are added dropwise to water, followed by filtering and washing the precipitation and then drying or calcinating at a predetermined temperature, thereby to give the target biocidal material complex.

The calcium phosphates to be used in the invention are not limited, provided that they are the compounds mainly comprising phosphoric acid and calcium. Examples of the calcium phosphates are hydroxyapatite ($Ca_{10}(PO_4)_6(OH)_2$), calcium tertiary phosphate ($Ca_3(PO_4)_2$). calcium secondary phosphate ($CaHPO_4$), octacalcium phosphate ($Ca_8H_2(PO_4)_6$), tetracalcium phosphate ($Ca_4O(PO_4)_2$), etc., preferably hydroxyapatite, calcium tertiary phosphate, etc., more preferably hydroxyapatite.

Hydroxyapatite is known as an amphoteric ion exchanger and, therefore, hydroxyapatite-like compounds, for example, wherein the composition formula of the hydroxyapatite ($Ca_{10}(PO_4)_6(OH)_2$) is partially changed in such a manner that $Ca^{2+}$ is replaced with $Na^+$, $K^+$, $Sr^{2+}$, $Ba^{2+}$, $Pb^{2+}$, $Zn^{2+}$, $Cd^{2+}$, $Cu^{2+}$, $Mg^{2+}$, $Fe^{2+}$, $Mn^{2+}$, etc., $PO_4^{3-}$ is replaced with $SO_4^{2-}$, $CO_3^{2-}$, $HPO_4^{2-}$, $AsO_4^{2-}$, $SiO_4^{2-}$, etc., and $OH^-$ is replaced with $F^-$, $Cl^-$, $Br^-$, $CO_3^{2-}$, etc. may be used.

It is advantageous to use the biocidal material complex, wherein a calcium phosphate is re-precipitated in order to increase the affinity for the pathogenic microorganisms by a solid-liquid reaction of a solution prepared by dissolving calcium phosphates in acid and a suspension prepared by suspending the biocidal material in water or an alkaline solution. firstly because the surface area of the re-precipitated calcium phosphate is so large that the cell adsorbing capacity is increased and secondary because the dispersibility of the biocidal material in the complex is increased.

Examples of the acid to be used in dissolving calcium phosphates are hydrochloric acid, nitric acid, etc., more preferably hydrochloric acid. Examples of the alkaline aqueous solution to be used in suspending the biocidal material are aqueous solutions of potassium hydroxide, sodium hydroxide, lithium hydroxide, ammonium hydroxide, sodium carbonate, potassium carbonate, sodium hydrogencarbonate, potassium hydrogencarbonate or the like, preferably of potassium hydroxide or sodium hydroxide.

The biocidal material complex thus obtained can efficiently sterilize pathogenic microorganisms by the synergy effect produced by the cell adsorbing action of calcium phosphate and the biocidal action of an active ingredient such as silver ion, copper ion or zinc ion since the biocidal material particles excellent in the biocidal ability are uniformly dispersed on the calcium phosphate which is the matrix for the particles.

Therefore, in order to put the present invention effectively into practical use, it is highly important to determine a suitable mixing ratio of the calcium phosphate to the biocidal material since an increase in the calcium phosphate content increases the affinity for microorganisms but decreases the biocidal effect, whereas an increase in the biocidal material content increases the biocidal effect but decreases the affinity for microorganisms.

The mixing ratio of the biocidal material with respect to the biocidal material complex is about 1-40 wt%, preferably about 2-30 wt%, more preferably about 2-25 wt%.

The calcinating temperature in preparing the biocidal material complex is about 400-1000°C, preferably about 400-800°C, more preferably about 400-500°C. The calcinating time is not limited, but preferably is about 3-12 hours, more preferably about 3-8 hours.

The biocidal material complex may be used as it is in particles, as being added to a matrix such as a resin and paper, or as a molded product and filter medium prepared by adding thereto a binder.

It is possible to regenerate and reuse a biocidal material complex of the invention which is used for a biocidal treatment using the biocidal material complex after use with a solution containing a phosphate or not less than two phosphate, which is used as a cell-desorbing agent, so as to remove dead cells from the surface of the used biocidal material complex. Examples of the cell-desorbing agent are:aqueous solutions of phosphates such as sodium phosphate, sodium hydrogenphosphate, potassium phosphate, potassium hydrogenphosphate, ammonium phosphate, ammonium hydrogenphosphate, or the like, preferably, of sodium phosphate, sodium hydrogenphosphate, potassium phosphate or potassium hydrogenphosphate.

Phosphate ion concentration in the cell desorption may be, as a $PO_4^{3-}$ ion, in the range from 1 mol/m$^3$ to a saturation concentration of each of the phosphates; however, it is preferable to carry out the cell desorption with the phosphate ion concentration of 5 mol/m$^3$.

In addition, the dead cell desorption may be carried out by means of calcination. By calcinating a biocidal material complex after being used for a biocidal treatment at a temperature of 400-800°C, which temperature is preferable but not limited, the dead cells adhered on the biocidal material complex surface areburnt so that the biocidal material complex surface is renewed, thereby enabling to reuse the biocidal material complex.

The biocidal material and biocidal material complex of the invention can be used in the field where the conventional biocidal materials have been used.

Gaseous matters to be subjected to the biocidal treatment include the atmospheric air and air in living environment. The biocidal treatment is carried out by placing particles or a molded product of the biocidal material or of the biocidal material complex at where the gaseous matters are present so as to bring them into contact with the air. In this case, a hygroscopic compound may be mixed in order to increase the amount of silver ions released from the biocidal material or from the biocidal material complex. Examples of the hygroscopic compound are silica gel, silica sol, magnesium sulfate, potassium chloride, magnesium chloride, etc., among which silica gel is the most preferable option from the viewpoint of safety. Liquids to be subjected to the biocidal treatment are environmental water such as water treated in waste water treatment tank, rainwater, lake, river; public water supply; treated water supply; sewage; etc. The biocidal treatment may be carried out by a batch-wise treatment, i.e. by adding particles or a molded product of the biocidal material or of the biocidal material complex directly to the liquid to be sterilized. However, in view of improving the treatment efficiency, the biocidal treatment is preferably carried out by passing the liquid through a column which is charged with the molded product. It is possible to adjust the amounts of the biocidal material, biocidal material complex and their molded products to be used, aeration amount of gaseous matter and flow amount of liquid as required depending on the treatment conditions.

According to the present invention, it is possible to provide a biocidal material capable of retaining a large amount of silver ions and continuously releasing a microdose of the silver ions by using as a support for the silver ions silicon-containing phosphates which retain the silver ions stably due to the structural properties and are excellent in chemical resistance and heat resistance. Further, a biocidal material complex is obtainable according to the invention by combining the biocidal material and calcium phosphates increased in the affinity for pathogenic microorganisms, wherein the biocidal action of the biocidal material is increased so that the biocidal material complex of the invention can exhibit biocidal action against the pathogenic microorganisms with a relatively small amount of silver ions.

Moreover, it is possible to regenerate and reuse the biocidal material complex by desorbing dead cells from the biocidal material complex surface using an aqueous phosphate solution as a cell-desorbing solution, thereby renewing the biocidal material surface.

The invention thus contributes to reduce the amount of silver ions to be used, thereby achieving a satisfactory biocidal effect at a low cost. Further. since the biocidal material complex of the invention can be regenerated and reused, it is remarkably useful as an environmentally-low-risk-type biocidal material.

The present invention is illustrated based on examples in the following, however, the invention is not limited to the examples.

EXAMPLES

Example 1

A stoichiometric amount of sodium nitrate ($NaNO_3$) and iron nitrate nonahydrate ($Fe(NO_3)_3 \cdot 9H_2O$) were separately dissolved in water, and the resulting solutions were mixed. To the mixture solution were added diammonium hydrogenphosphate ($(NH_4)_2HPO_4$) and silicon dioxide ($SiO_2$). The mixture was stirred with a stirrer. Then the mixture was dried with an oven. Thereafter, the temperature of the oven was raised from room temperature to $350°c$ over 2 hours, maintained at $350°c$ for 1 hour, raised from $350°C$ to $500°C$ over 1 hour and maintained at $500°c$ for 5 hours, thereby giving a compound represented by General Formula (4).

$$Na_2FeS1(PO_4)_3 \tag{4}$$

Subsequently, 1 g of the compound represented by General Formula (4) was added to $0.1N$-$AgNO_3$ (100 $cm^3$). The mixture was shaken for 1 week at room temperature. The mixture was then filtered (using a $0.3\mu m$-membrane filter). The separated product was washed with water and dried at $80°C$ for 24 hours, giving a silver-retaining biocidal material (Ag concentration: 2.1 mmol/g) represented by General Formula (5).

$$Ag_{1.06}Na_{0.94}FeSi(PO_4)_3 \tag{5}$$

Silver ions were determined by atomic absorption spectrometry. The amount of exchanged silver ion per gram of the biocidal material was calculated from the difference between the initial concentration of the silver ion and the equilibrium concentration after the ion exchange.

Example 2

A stoichiometric amount of sodium nitrate ($NaNO_3$) and aluminum nitrate nonahydrate ($Al(NO_3)_3 \cdot 9H_2O$) were separately dissolved in water, and the resulting solutions were mixed. To the mixture solution were added diammonium hydrogenphosphate ($(NH_4)_2HPO_4$) and silicon dioxide ($SiO_2$). The mixture was stirred with a stirrer. Then the mixture was dried with an oven. Thereafter, the temperature of the oven was raised from room temperature to $350°C$ over 2 hours, maintained at $350°C$ for 1 hour. raised from $350°C$ to $500°C$ over 1 hour and maintained at $500°C$ for 5 hours, thereby giving a compound represented by General Formula (6).

$$Na_2AlSi(PO_4)_3 \tag{6}$$

Subsequently, the compound represented by General Formula (6) was subjected to the similar process as in Example 1, giving the silver-retaining type biocidal material (Ag concentration; 1.5 mmol/g).

$$Ag_{0.66}Na_{1.34}Alsi(PO_4)_3 \tag{7}$$

Example 3

Into a aqueous solution of disodium hydrogenphosphate ($Na_2HPO_4$, 0.288 mol/l) were simultaneously added dropwise zirconium oxychloride($ZrOCl_2 \cdot 8H_2O$) and a mixture of sodium silicate ($Na_2O \cdot 3SiO_2$) and sodium hydroxide (NaOH) at a molar ratio of 2Zr:1.5Si:1.5P. The produced reaction product was washed with water, dried and calcined

at 1200°C, giving the compound represented by General Formula (8).

$$Na_{2.5}Zr_2Si_{1.5}P_{1.5}O_{12} \tag{8}$$

Subsequently, 3 g of the compound represented by General Formula (8) and 1000 ml of 1N-HCl were mixed and stirred for 3 hours at room temperature. Then, the mixture was filtered, and the collected product was washed and dried, giving the protic type sample represented by General Formula (9).

$$H_{2.5}Zr_2Si_{1.5}P_{1.5}O_{12} \tag{9}$$

The resulting protic type sample (5 g) was added to a 0.06N aqueous solution of silver nitrate (500 cm$^3$). The mixture was stirred for 3 hours at room temperature and filtered. The collected product was washed and dried, giving the silver-retaining type biocidal material (Ag concentration: 2.97 mmol/g) represented by General formula (10).

$$Ag_{2.03}H_{0.47}Zr_2Si_{1.5}P_{1.5}O_{12} \tag{10}$$

Example 4

The protic type sample (2 g) obtained in Example 3 was added to a 0.1N aqueous solution of copper nitrate (200 cm$^3$), followed by stirring for 3 hours at room temperature. Then, the mixture was filtered with a 1.0 μm-membrane filter. The collected product was washed with water and dried, giving a copper-retaining biocidal material (Cu concentration: 0.45 mmol/g) represented by General Formula (11).

$$CU_{0.216}H_{2.254}Zr_2Si_{1.5}P_{1.5}O_{12} \tag{11}$$

Subsequently, 1.84 g of the copper-retaining type sample was 200 cm$^3$ of a 0.01N aqueous solution of silver nitrate. The mixture was stirred at room temperature for 30 minutes. Then, the mixture was subjected to the similar process as in the preparation of the copper-retaining type sample, giving a silver-copper-retaining type biocidal material (Ag concentration: 1.09 mmol/g. Cu concentration 0.27 mmol/g) represented by General Formula (12).

$$Ag_{0.589}Cu_{0.143}H_{1.768}Zr_2Si_{1.5}P_{1.5}O_{12} \tag{12}$$

Example 5

The biocidal material complex of the invention can easily be prepared concretely by the following process.
As a compound containing calcium phosphates, 19.2 g of hydroxyapatite (product of Tomita Pharmaceutical Corporation Limited: Tradename: HA-300BP, hereinafter abbreviated as "Cap") dissolved in 200 cm$^3$ of 2N-HCl to prepare a CaP solution.
Subsequently, to a 500 cm$^3$-stainless vessel charged with 100 cm$^3$ of an ion exchange water, 0.71 g of the silver-retaining type biocidal material (silver concentraion: 2.97 mmol/g) of General Formula (10) which was obtained in Example 3 was added, giving a biocidal material suspension.
To the biocidal material suspension, the CaP solution and 5N-KOH aqueous solution were added dropwise using metering pumps. At this time, dropping rates of the CaP solution and KOH aqueous solution were adjusted so that the pH value of the reaction system was maintained at pH 7.0-8.0. At the same time with the dropping, generation of the biocidal material complex as a white precipitate was observed. The white precipitate was filtered (using filter No. 2), followed by washing with water and drying, giving a target biocidal material complex (silver concentration; 0.106 mmol/g).

Example 6

After heating an α-zirconium phosphate (Zr(HPO$_4$)$_2$·H$_2$O) as a pretreatment at a temperature of 250°C for 4 hours to obtain an anhydrite thereof, α-anhydrous zirconium phosphate (Zr(HPO$_4$)$_2$), sodium carbonate (Na$_2$CO$_3$),

silicon dioxide ($SiO_2$), zirconium oxide ($ZrO_2$) are mixed in a molar ratio of 0.75:1.25:1.5=1.25. Next, the mixture was heated for 6 hours until the temperature was raised from room temperature to 700°C, followed by further heating for 10 hours until the temperature reached 1200°C, and then the temperature of 1200°C was maintained for 20 hours to give a compound represented by General Formula (13).

$$Na_{2.5}zr_2Si_{1.5}P_{2.5}O_{12} \tag{13}$$

To 1N-HCl (100cm$^3$) was added 1.0 g of the compound obtained above, followed by shaking the mixture for 1 week. The mixture was then filtered (using a 0.3 pm-membrane filter), washed with water and dried at a temperature of 80°C for 24 hours to give a compound represented by the following General Formula (14).

$$H_{2.5}Zr_2Si_{1.5}P_{1.5}O_{12} \tag{14}$$

To 0.1N-AgNO$_3$ (100 cm$^3$) was added 1.0 g of the compound represented by Formula (14), followed by shaking the mixture for 1 week at room temperature.. The mixture was then filtered (using a 0.3 pm-membrane filter), washed with water and dried at a temperature of 80°C for 24 hours to give a biocidal material (Ag concentration: 3.28 mmol/ g) represented by Formula (15).

$$Ag_{2.356}H_{0.144}Zr_2Si_{1.5}P_{1.5}O_{12} \tag{15}$$

Example 7

The biocidal ability of the biocidal materials was evaluated according to the following test method.
*Escherichia coli* (*Escherichia coli* IAM12119: hereinafter abbreviated as "E. coli") was cultured in a liquid culture medium of Nutrient Broth at a temperature of 37°C. The cultured E. coli was added to a 9 kg/m$^3$-Nacl aqueous solution to prepare an E. coli sample solution having an initial cell concentration of $1 \times 10^{11}$ cells/m$^3$ (No).
To the E. coli sample solution (10 dm$^3$) was added the biocidal material until concentration of the biocidal material reached 0.5 kg/m$^3$. The mixture was then transferred to a L-shaped vessel and subjected to a shake biocidal treatment at 25 strokes/minute in the darkness. Samples were prepared by taking out a part of the mixture at time points of 0 minute, 15 minutes, 30 minutes, 60 minutes, 90 minutes and 120 minutes of the shake for biocidal treatment. Each of the samples was seeded on an agar culture medium of Nutrient Broth together with 20 μg of L-cysteine, and then a number of the survival E. coli in each of the samples were calculated according to the colony counting method (Ind. Eng. Chem. Res., 34, 3920-3926, 1996).
The following equation was applied to all the data of changes with time in the E. coli survival rates during the 120 minutes of the biocidal treatment so as to calculate the number of lethal reaction n and an apparent biocidal rate constant (k") according to the nonlinear least square method with respect to each of the data. Equation 1

$$N_t / N_0 = exp\ (-k''t) \sum_{i=0}^{n-1} (k''t) / i\ !$$

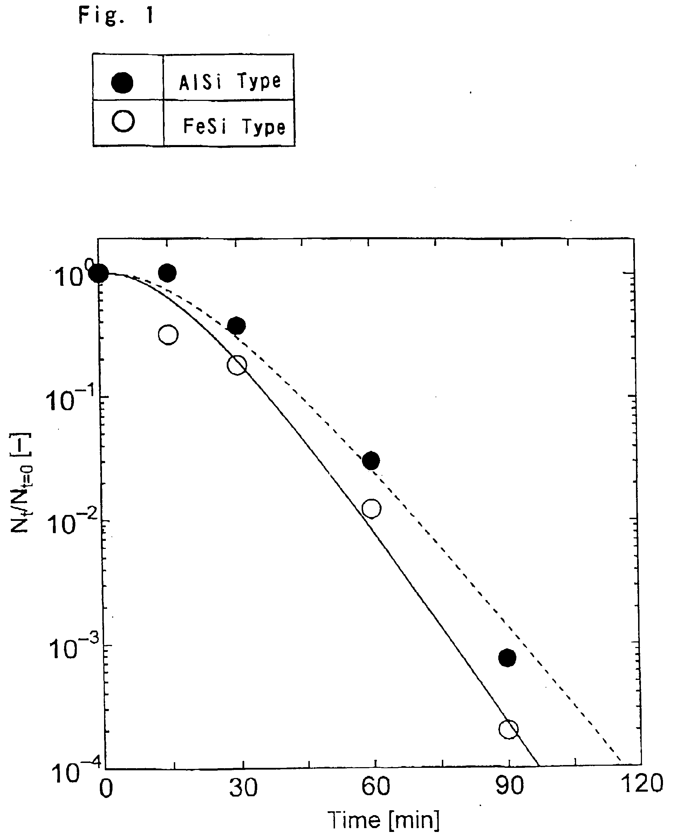

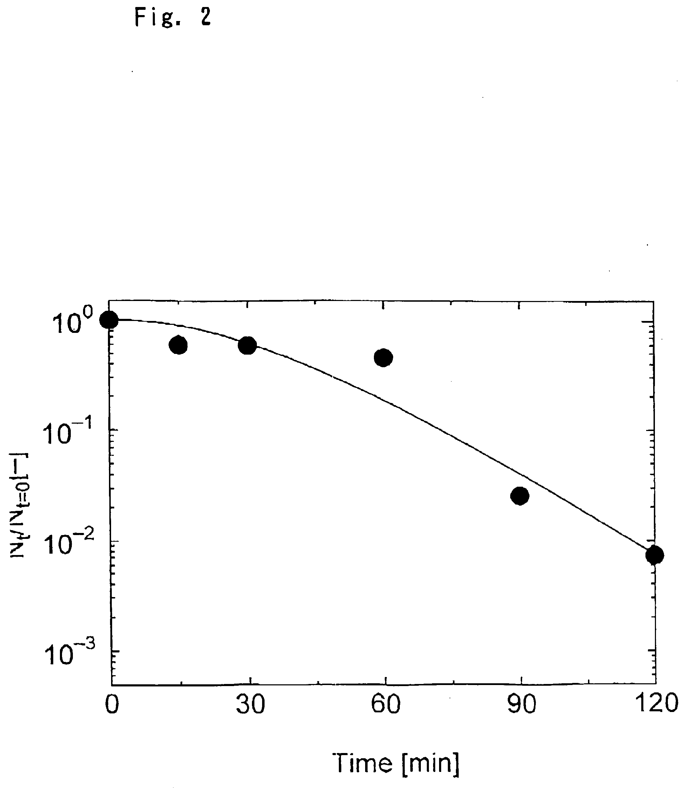

(wherein,
$N_t$: number of bacteria (cell) after t minutes of biocidal treatment (cells/m$^3$);
$N_o$: number of bacteria (cells) at the start of experiment (cells/m$^3$);
$N_t/N_o$ : survival rate of bacteria (cell) after t minutes: k": apparent biocidal rate constant (min$^{-1}$); and t: experimental biocidal time (min)).
As a result of fitting a number of many data, n in the above equation was determined to be 3. In evaluating the biocidal properties of the biocidal material with respect to the pathogenic microorganisms, the larger the biocidal rate constant k" is, the higher the biocidal ability is.
Results of the evaluation of the silver-retaining type biocidal materials synthesized in Examples 1, 2 and 6 are shown in Fig. 1 and Fig. 2. It was confirmed that the number of living cells decreased with time in all samples. The apparent biocidal rate constant (k") was obtained by applying the above equation to a change with time in a death rate ($N_t/N_{t=0}$) as given below:

$$k'' = 1.44 \times 10^{-1} min^{-1} \qquad \text{(example 1)}$$

$$k'' = 1.20 \times 10^{-1} min^{-1} \qquad \text{(example 2)}$$

$$k'' = 7.31 \times 10^{-2} min^{-1} \qquad \text{(example 6)}$$

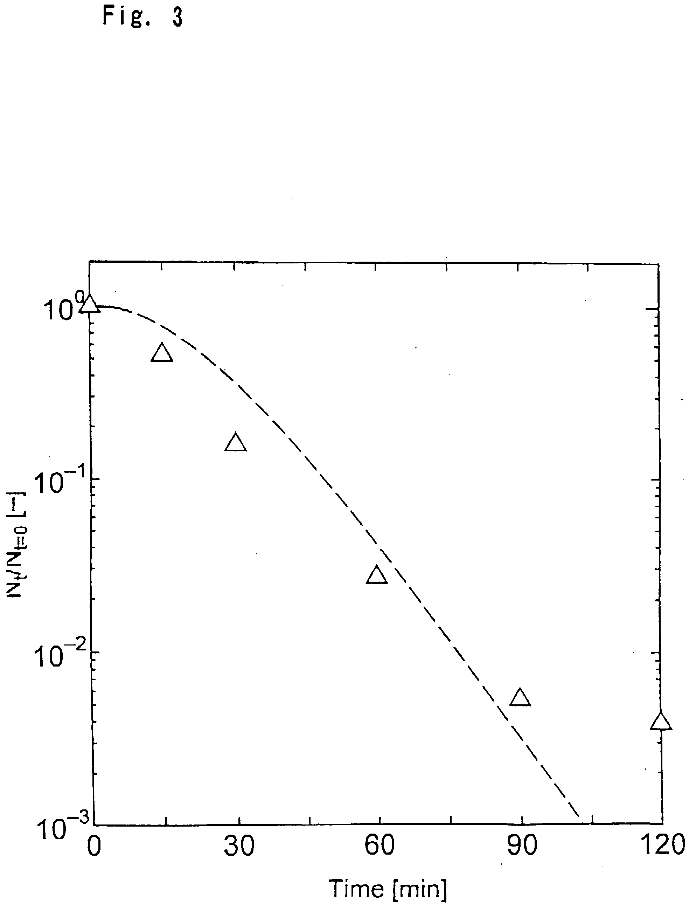

The biocidal material complex prepared in Example 5 was evaluated in the same manner as in the above. The evaluation results are shown in Fig. 3. The apparent biocidal rate constant (K'') obtained by applying the above equation to a change with time in a death rate ($N_t/N_{t=0}$) as given below:

$$k'' = 1.09 \times 10^{-1} min^{-1}$$

The biocidal material complex exhibited a higher value of k'' than the biocidal material which has greater concentration (Example 6:3.28mmol/g) of silver than the silver concentration (0.106 mmol/g) of the biocidal material complex.

The above result reveals that combining the biocidal material and calcium phosphate can produce a high biocidal effect with a relatively low silver content. Example 8

The regenerating method for the biocidal material complex of the invention can be carried out by taking the following process.

A glass column having a diameter of 5 mm, which was stuffed with glass wool as a filter medium, was charged with 140 mg of the biocidal material complex placed on top of the glass wool, followed by loading 35 cm$^3$ of a 0.9 wt%-NaCl aqueous solution wherein a concentration of E. coli was adjusted to be 1x10$^{13}$ cells/m$^3$,

The number of living cells and the number of whole cells contained in the filtered solution were calculated at each time points, and when the adsorption of E. coli by the biocidal material complex reached the saturation, 25 ml of a 30mM-NaH$_2$PO$_4$/Na$_2$HPO$_4$ buffer solution adjusted to pH 6 was added to the column, thereby carrying out an elution of the E. coli adsorbed by the biocidal material complex. After completing the elution of E. coli, the NaCl aqueous solution containing E. coli was loaded again to the column. As described above, the biocidal material complex of the invention can be recycled by repeating a cycle of E. coli adsorption, biocidal treatment and elution of E. coli.

In addition, the number of whole cells was determined by means of an optical microscope using a hemacytometer for phase difference, and the number of living cells was calculated according to the following method. Calculation of Living Cells:

Taken out was 0.1 cm$^3$ of the sample solution to which 9.0 kg/m$^3$-NaCl aqueous solution was added to dilute the sample solution to a predetermined concentration. 0.1 cm$^3$ of the diluent was applied to an agar culture medium of Nutrient Broth. The culture agar was then kept in a thermostatic chamber at a temperature of 37°c for 24 hours to carry out incubation. Finally, the number of colonies formed by the incubation was determined, to calculate the number of living cells.

## Claims

1. A biocidal material comprising, as an active ingredient, at least one species selected from the group consisting of

   a metallic salt compound represented by General Formula (1)

$$(Ag_2O)_a(A_2O)_b(BO)_c(C_2O_3)_d(SiO_2)_e(DO_2)_f(E_2O_5)g \qquad (1)$$

   (wherein A represents at least one species selected from the group consisting of alkali metallic elements, Cu, H and ammonium; B is at least one species selected from the group consisting of Fe, Cu, Zn, alkali earth metallic elements, Ni, Mn, Co, Cd, Hg and Au; C represents at least one species selected from the group consisting of Fe, Al, Mn, B, Co, Cr, V, Sc, Y, La, Ga, In, Sb and Bi; D represents at least one species selected from the group consisting of Ce, Mn, C, Hf and Os; E represents at least one member selected from P, Sb, V, Nb, Ta and Bi; the subscriptions respectively are numbers which satisfy $0<a$, $0<a+b<15$, $0\leqq c<15$, $0\leqq d<5$, $0<e$, $0<e+f<7.5$, $0<g<3$, $10\leqq a+b+c+3d+2(e+f)+5g\leqq15$);

a metallic salt compound represented by General Formula (2)

$$Ag_{a'} \cdot B'_{c'} \cdot D'_{e'} \cdot Al_{f'} \cdot Si_{g'} \cdot P_{h'} \cdot O_{i'} \tag{2}$$

(wherein B' represents at least one species selected from the group consisting of alkali metallic elements. alkali earth metallic elements, Cu, Zn, Fe, H and ammonium; D' represents at least one species selected from the group consisting of Zr, Ti and Sn; the subscriptions respectively are numbers which satisfy $0<a'$, $0 \leqq c'$, $0<a'+c' \leqq 4$, $0<e'$, $0<f'$, $0<e'+f \leqq 2$, $0<g' \leqq 3$, $0 \leqq h' \leqq 3$, $10 \leqq i' \leqq 15$); and
a metallic salt compound represented by General Formula (3)

$$AG_{a''} \cdot B''_{c''} \cdot D_1''_{e''} \cdot D_2''_{f''} \cdot Si_{g''} \cdot P_{h''} \cdot O_{i''} \tag{3}$$

(wherein B" represents at least one species selected from the group consisting of alkali metallic elements, alkali earth metallic elements, Cu, Zn, Fe, H and ammonium; $D_1''$ represents at least one species selected from the group consisting of Zr, Ti and Sn; $D_2''$ represents at least one species selected from the group consisting of metallic elements which can be transformed to be metal ions having 3-5 valences other than Zr, Ti, Sn and Al; the subscriptions respectively are numbers which satisfy $0<a''$, $0 \leqq c''$, $1<a''+c'' \leqq 4$, $1 \leqq e''+f'' \leqq 2$, $0<g'' \leqq 3$, $0 \leqq h''<3$, $10 \leqq i'' \leqq 15$).

2. A biocidal material complex comprising at least one metallic salt compound as set forth in claim 1 and calcium phosphate.

3. A biocidal method comprising bringing the biocidal material of claim 1 or the biocidal material complex of claim 2 into contact with a gas or liquid containing pathogenic microorganisms.

4. A method for regenerating the biocidal material complex comprising the steps of

bringing the biocidal material complex of claim 2 into contact with a gas or liquid containing pathogenic microorganisms; and
removing the pathogenic microorganisms adsorbed to the biocidal material complex from the biocidal material complex by means of a cell-desorbing agent or calcination.

Fig. 1

Fig. 2

Fig. 3

**European Patent Office**

**EUROPEAN SEARCH REPORT**

Application Number

EP 00 12 6597

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199503<br>Derwent Publications Ltd., London, GB;<br>Class A60, AN 1995-019158<br>XP002164127<br>& JP 06 305926 A (TOA GOSEI CHEM IND LTD),<br>1 November 1994 (1994-11-01)<br>* abstract * | 1-4 | A01N59/16<br>A01N59/26 |
| X | EP 0 678 548 A (UNILEVER PLC ;UNILEVER NV (NL)) 25 October 1995 (1995-10-25)<br>* claims * | 1,3 | |
| X | EP 0 540 819 A (SANGI KK)<br>12 May 1993 (1993-05-12)<br>* claims *<br>* page 3, line 40 - line 55 * | 1-4 | |
| X | EP 0 808 570 A (TOTO LTD)<br>26 November 1997 (1997-11-26)<br>* page 5; table 1 *<br>* page 9, line 34 - line 54 * | 1-4 | |
| A,D | DATABASE WPI<br>Section Ch, Week 199317<br>Derwent Publications Ltd., London, GB;<br>Class D22, AN 1993-140283<br>XP002164128<br>& JP 05 078218 A (MATSUSHITA ELEC IND CO LTD), 30 March 1993 (1993-03-30)<br>* abstract * | 2 | TECHNICAL FIELDS SEARCHED (Int.Cl.7)<br><br>A01N<br>C01G |
| A | US 5 009 898 A (ATSUMI KIMINORI ET AL)<br>23 April 1991 (1991-04-23)<br>* claims * | 2 | |

-/--

The present search report has been drawn up for all claims

| Place of search | Date of completion of the search | Examiner |
|---|---|---|
| THE HAGUE | 28 March 2001 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 00 12 6597

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 151 122 A (ATSUMI KIMINORI ET AL) 29 September 1992 (1992-09-29) * claims * --- | 1-3 | |
| A | US 5 296 238 A (SUGIURA KOJI ET AL) 22 March 1994 (1994-03-22) * column 2 – column 3 * ----- | 1,3 | |

TECHNICAL FIELDS SEARCHED (Int.Cl.7)

The present search report has been drawn up for all claims

| Place of search | Date of completion of the search | Examiner |
|---|---|---|
| THE HAGUE | 28 March 2001 | Decorte, D |

EPO FORM 1503 03.82 (P04C01)

## ANNEX TO THE EUROPEAN SEARCH REPORT
## ON EUROPEAN PATENT APPLICATION NO.

EP 00 12 6597

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2001

| Patent document cited in search report | | Publication date | Patent family member(s) | | Publication date |
|---|---|---|---|---|---|
| JP 6305926 | A | 01-11-1994 | NONE | | |
| EP 0678548 | A | 25-10-1995 | DE | 69512300 D | 28-10-1999 |
| | | | DE | 69512300 T | 13-04-2000 |
| EP 0540819 | A | 12-05-1993 | JP | 5124919 A | 21-05-1993 |
| | | | DE | 69223928 D | 12-02-1998 |
| | | | DE | 69223928 T | 18-06-1998 |
| | | | KR | 9514709 B | 13-12-1995 |
| | | | US | 5266534 A | 30-11-1993 |
| EP 0808570 | A | 26-11-1997 | JP | 2961892 B | 12-10-1999 |
| | | | WO | 9623412 A | 08-08-1996 |
| JP 5078218 | A | 30-03-1993 | NONE | | |
| US 5009898 | A | 23-04-1991 | DE | 3932469 A | 05-04-1990 |
| | | | FR | 2636811 A | 30-03-1990 |
| | | | GB | 2224727 A,B | 16-05-1990 |
| | | | GB | 2236676 A,B | 17-04-1991 |
| | | | HK | 70192 A | 25-09-1992 |
| | | | HK | 70292 A | 25-09-1992 |
| | | | IT | 1232344 B | 28-01-1992 |
| | | | JP | 3047118 A | 28-02-1991 |
| | | | JP | 8005782 B | 24-01-1996 |
| | | | US | 5268174 A | 07-12-1993 |
| | | | JP | 2180270 A | 13-07-1990 |
| | | | JP | 2801022 B | 21-09-1998 |
| US 5151122 | A | 29-09-1992 | DE | 4036298 A | 29-05-1991 |
| | | | FR | 2654426 A | 17-05-1991 |
| | | | GB | 2238044 A,B | 22-05-1991 |
| | | | IL | 96313 A | 30-03-1995 |
| | | | IT | 1246767 B | 26-11-1994 |
| | | | JP | 2762423 B | 04-06-1998 |
| | | | JP | 3218765 A | 26-09-1991 |
| US 5296238 | A | 22-03-1994 | DE | 4106165 A | 03-09-1992 |

For more details about this annex : see Official Journal of the European Patent Office, No. 12/82